# EUROPÄISCHE PATENTSCHRIFT

(11) **EP 3 107 834 B1**
(45) Veröffentlichungstag und Bekanntmachung des Hinweises auf die Patenterteilung: **07.06.2023**
(21) Anmeldenummer: 15706402.3
(22) Anmeldetag: 16.02.2015
(51) Int. Cl.: A47J 31/06, B65D 85/804

(54) **KAPSEL MIT EINEM VORZUGSWEISE ROTATIONSSYMMETRISCH AUSGEBILDETEM KAPSELKÖRPER**
CAPSULE WITH A PREFERABLY ROTATIONALLY SYMMETRICAL CAPSULE BODY
CAPSULE POURVUE D'UN CORPS, DE PRÉFÉRENCE À SYMÉTRIE DE RÉVOLUTION

(30) Priorität: 21.02.2014 CH 244142014
(43) Veröffentlichungstag der Anmeldung: 28.12.2016
(73) Patentinhaber: Delica AG, 5033 Buchs AG (CH)
(72) Erfinder: BRÖNNIMANN, Markus, CH-3274 Hermrigen (CH); AFFOLTER, Roland, CH-5103 Möriken (CH); PANOS, Alexander, CH-5032 Aarau Rohr (CH); BUGNARD, Guillaume, CH-4500 Solothurn (CH); GUGERLI, Raphael, CH-8904 Aesch (CH)
(74) Vertreter: Hepp Wenger Ryffel AG
(86) Internationale Anmeldenummer: PCT/EP2015/053222
(87) Internationale Veröffentlichungsnummer: WO 2015/124534

(56) Entgegenhaltungen:
- EP-A1- 1 775 234
- EP-A1- 2 537 779
- WO-A1-2011/124990
- WO-A1-2012/117383
- WO-A2-2004/064582
- GB-A- 1 256 247
- US-A1- 2010 062 127
- US-A1- 2010 064 898

## Beschreibung

Die vorliegende Erfindung betrifft eine Kapsel mit einem vorzugsweise rotationssymmetrisch ausgebildeten Kapselkörper gemäss dem Oberbegriff von Anspruch 1. Derartige Kapseln finden heute insbesondere für die Zubereitung von Kaffee oder Kaffeemischgetränken verbreitet Anwendung.

Die Kapsel bildet eine Portionsverpackung für den Transport und die Lagerung der Substanz und gleichzeitig spielt die Ausgestaltung der Kapsel eine wichtige Rolle bei der Zubereitung des Getränks in einer entsprechenden Getränkezubereitungsmaschine. Derartige Maschinen arbeiten in der Regel mit einem hohen Betriebsdruck, wobei die Form der Kapsel das Strömungsverhalten und den Extraktionsprozess insgesamt stark beeinflusst. Das Auslaufrohr mit seiner Auslauföffnung dient dazu, das fertige Getränk direkt in eine darunter aufgestellte Tasse zu lenken, ohne dass auf der Austrittseite dichtende Anschlüsse erforderlich sind. Eine derartige Kapsel ist beispielsweise durch die WO 2009/115475 bekannt geworden. Beim Auslaufrohr kann es sich dabei auch nur um einen relativ kurzen Rohrstutzen handeln, der zumindest teilweise über den Boden der Kapsel hinausragt.

Die US 2010/0062127 A1 beschreibt einen mit einem Deckel verschlossenen Becher für die Zubereitung eines flüssigen Lebensmittels, wobei der Deckel eine Eintrittsseite für eine Flüssigkeit bildet. Im Becher ist ein statischer Mischer angeordnet, der aus konzentrischen Rohren gebildet ist, die sich vom Boden des Bechers bis zum Deckel erstrecken.

Die WO 2012/117383 A1 beschreibt eine Kapsel zur Aufnahme von Kaffeepulver für die Zubereitung eines Kaffeeaufgusses. Die Kapsel verfügt über ein zentrales Kamin und das Kaffeepulver ist in der umlaufenden Kammer zwischen Kamin und Seitenwand der Kapsel angeordnet. Ausserdem verfügt die Kapsel über vertikale Filtermittel, wobei die in die Kapsel eingeführte Brühflüssigkeit gegen die Filtermittel von aussen gegen das Zentrum konvergiert.

Die EP 2 537 779 A1 beschreibt eine Kapsel gemäß dem Oberbegriff des Anspruchs 1, für die Zubereitung eines Getränks mit einem zentralen Auslaufrohr. Der Boden der Kapsel ist verschlossen und wird durch ein Penetrationselement im Auslaufrohr durchstossen.

Ein Problem bei bekannten Kapseln besteht im sogenannten Nachtropfen, wobei unmittelbar nach Beendigung des Zubereitungsprozesses oder insbesondere auch bei der Entfernung der gebrauchten Kapsel aus der Maschine weiterhin Flüssigkeit aus dem Auslaufrohr tropft. Da maschinenseitig keinerlei Siebvorrichtung für die austretende Flüssigkeit vorgesehen ist, muss bei konventionellen Kapseln ausserdem ein Filter eingebaut werden, das den Boden der Kapsel über der Auslauföffnung flächendeckend abschliesst. Dies ist jedoch mit einem grossen Aufwand verbunden und kann zudem den Füllprozess der Kapsel erschweren.

Es ist daher eine Aufgabe der Erfindung, eine Kapsel der eingangs genannten Art zu schaffen, welche einfach und kostengünstig hergestellt werden kann und mit welcher das Filterproblem und gleichzeitig auch das Problem des Nachtropfens gelöst wird. Ausserdem sollen strömungstechnisch optimale Bedingungen geschaffen werden, wobei Scherkräfte auf die durch die Kapsel strömende Flüssigkeit einwirken. Damit wird eine optimale Durchmischung mit Luft erzielt, was für die Bildung einer optimalen Crema beim Kaffee oder einer Milchschaumbildung bei Milchgetränken vorteilhaft ist. Zugleich soll ein gleichmässiger und homogener Auslaufstrahl sichergestellt werden. Diese Aufgabe wird erfindungsgemäss mit einer Kapsel gelöst, welche die Merkmale im Anspruch 1 aufweist.

Das sich in das Innere der Kapsel erstreckende Auslaufrohr bildet einen Überlauf für die Flüssigkeit in der Kapsel, welcher verhindert, dass die in der Kammer verbleibende Restflüssigkeit vollständig auslaufen kann. Das Filterelement zum Zurückhalten von Feststoffen in der Kapsel vor dem Austritt der Flüssigkeit durch die Auslauföffnung ist unmittelbar dem Auslaufrohr zugeordnet, so dass das füllbare Volumen der Kammer nicht durch flächendeckende Filter reduziert werden muss.

Die Filteröffnungen des Filterelements haben eine gewisse Düsenfunktion und je nach Ausgestaltung kann mit diesen Filteröffnungen ein bestimmtes Strömungsverhalten bewirkt werden. Je nach Anwendungsfall sind die Filteröffnungen somit Düsenöffnungen. Die Querschnittsform der wenigstens einen Düsenöffnung kann unterschiedlich ausgestaltet werden. Es kann sich dabei um Schlitze, Kreuzschlitze, kreisförmige Öffnungen handeln, wobei auch die Querschnittsform individuell ausgestaltet werden kann.

Das Filterelement ist am oberen, dem Deckel zugewandten Ende des Auslaufrohrs angeordnet. Das Auslaufrohr kann sich dabei bis an die Unterseite des Deckels erstrecken und mit diesem verbunden sein. In einem derartigen Fall bildet der Deckel der Kapsel gleichzeitig den oberen Abschluss des Auslaufrohrs.

Das Filterelement kann dabei Filteröffnungen in der Form von Schlitzen oder anderen Öffnungen im Auslaufrohr aufweisen, die sich vorzugsweise in Längsrichtung des Auslaufrohrs und um das Auslaufrohr erstrecken. Denkbar ist aber auch eine Lochsiebstruktur, die sich vorzugsweise über den gesamten Umfang des Auslaufohrs erstreckt. Bei dieser Anordnung ist das Filterelement ersichtlicherweise in das Auslaufrohr integriert. Wenn die Filteröffnungen insbesondere in der Form von umlaufend vertikal ausgerichteten Schlitzen am Auslaufrohr angeordnet sind, bewirkt dies eine konzentrische Strömung in horizontaler Richtung. Dadurch entsteht eine intensive Verwirbelung im Auslaufrohr, welche das Aufschäumen der Flüssigkeit begünstigt. Selbstverständlich ist es dabei auch denkbar, dass sowohl seitlich um das Auslaufrohr verlaufende Filteröffnungen, als auch auf einer Abschlussplatte angeordnete Filteröffnungen miteinander kombiniert sind. Damit kann die Durchflussrate erhöht und der Verwirbelungseffekt verbessert werden.

Alternativ ist es auch denkbar, dass sich das Auslaufrohr bis auf einen verbleibenden Zwischenraum unter den Deckel erstreckt und dass das Filterelement über der Einlassöffnung des Auslaufrohrs angeordnet ist. Bei dieser Konstruktion bildet das Filterelement den oberen Abschluss des Auslaufrohrs. Das Filterelement ist dabei eine Filterfolie, welche über die Einlassöffnung gespannt wird.

Eine besonders einfache Herstellung der Kapsel wird dadurch ermöglicht, dass das Filterelement einstückig mit dem Auslaufrohr ausgebildet ist. Dies lässt sich besonders einfach realisieren, wenn der Kapselkörper ein Spritzgussteil aus Kunststoffmaterial ist. Alternativ ist es aber auch denkbar, dass das Filterelement ein auf das Auslaufrohr aufgesetztes separates Teil ist. Die separate Ausbildung des Filterelements erlaubt ersichtlicherweise die Herstellung von komplexeren Formen und Filteröffnungen.

Erfindungsgemäss ist das Auslaufrohr wenigstens über einen Teil seiner Länge als separates Bauteil ausgebildet. Damit wird auch die Herstellung komplexerer Formen aus Kunststoffmaterial ermöglicht. Ausserdem ist es denkbar, dass beispielsweise der Kapselkörper in einem Tiefziehverfahren und das Auslaufrohr in einem Spritzgussverfahren hergestellt werden. Dabei ist es ersichtlicherweise nicht notwendig, dass sich das als separates Bauteil ausgebildete Auslaufrohr über die gesamte Länge von der Einlassöffnung bis zur Auslauföffnung erstreckt. Insbesondere im Bereich der Auslauföffnung kann das Auslaufrohr auch als kurzer Rohrstutzen in den Kapselboden integriert sein. Dabei ist es besonders vorteilhaft, wenn das als separates Bauteil ausgebildete Auslaufrohr am Boden der Kapsel eingesetzt oder einsetzbar ist. Es kann sich dabei um eine Pressverbindung oder Schnappverbindung oder auch um eine Verklebung oder Verschweissung handeln.

Weitere Vorteile können erzielt werden, wenn der Boden der Kapsel eine vorzugsweise kreisförmige Vertiefung aufweist, in welche das als separates Bauteil ausgebildete Auslaufrohr eingerastet oder einrastbar ist. Die Rastverbindung gewährleistet ein einfaches Zusammensetzen der Bauteile. Ausserdem können in den gleichen Kapselkörper unterschiedliche Auslaufrohre eingerastet werden. Die Vertiefung im Boden kann zusätzlich zur Aufnahme einer Berstfolie dienen.

Das als separates Bauteil ausgebildete Auslaufrohr kann ganz unterschiedliche Konfigurationen aufweisen. Es kann an der Oberkante einen Siegelrand aufweisen, an dem es fest mit dem Deckel verbunden ist. In einem derartigen Fall wird das Filterelement durch Filteröffnungen gebildet, welche um den oberen Rand des Auslaufrohrs angeordnet sind. Alternativ kann das obere Ende des Auslaufrohrs auch im Abstand zum Deckel angeordnet sein und mit einer Lochfolie abgeschlossen sein, welche als wasserdurchlässige Volumenbegrenzung wirkt. Erfindungsgemäss ist das als separates Bauteil ausgebildete Auslaufrohr an dessen Boden mit einer Filterplatte abgeschlossen und ist ausschliesslich oder zusätzlich mit einer Substanz gefüllt.

Eine besonders optimale Verwirbelung kann erreicht werden, wenn das Auslaufrohr in einen beliebig ausgebildeten Rohrstutzen mündet, in dem eine Prallplatte angeordnet ist. Diese kann so gehalten sein, dass der Flüssigkeitsstrom im Auslaufrohr etwa im rechten Winkle auf die Prallplatte trifft und danach seitlich über den Rand der Prallplatte abfliesst.

Weitere Einzelmerkmale und Vorteile der Erfindung ergeben sich aus der nachstehenden Beschreibung von Ausführungsbeispielen und aus den Zeichnungen. Dabei sind die Ausführungsformen der Figuren 1-30, 33 und 35 nicht erfindungsgemäss und dienen lediglich der Veranschaulichung. Es zeigen:
- Figur 1:: Einen Querschnitt durch eine Kapsel mit einem bis zum Deckel geführten Auslaufrohr und integriertem Filterelement,
- Figur 2:: Eine perspektivische Darstellung der Innenseite des Kapselkörpers gemäss Figur 1,
- Figur 3:: Eine perspektivische Darstellung der Aussenseite des Kapselkörpers gemäss Figur 1,
- Figur 4:: Eine vergrösserte Detaildarstellung des Filterelements an der Kapsel gemäss Figur 1 mit schlitzförmigen Filteröffnungen,
- Figur 5:: Eine vergrösserte Detaildarstellung eines Filterelements mit Lochsiebstruktur,
- Figur 6:: Ein Querschnitt durch ein alternatives Beispiel eines Kapselkörpers mit einem Trennwandrohr,
- Figur 7:: Eine perspektivische Darstellung der Innenseite des Kapselkörpers gemäss Figur 6,
- Figur 8:: Eine perspektivische Darstellung des Trennwandrohrs am Filterkörper gemäss Figur 7,
- Figur 9:: Ein Querschnitt durch ein alternatives Ausführungsbeispiel eines Filterkörpers mit einem in das Ablaufrohr integrierten Filterelement,
- Figur 10:: Eine perspektivische Darstellung der Innenseite des Kapselkörpers gemäss Figur 9,
- Figur 11:: Eine vergrösserte Detaildarstellung des Filterelements am Kapselkörper gemäss Figur 10,
- Figur 12:: Ein Querschnitt durch einen Kapselkörper analog zu Figur 9 jedoch mit zusätzlichem Trennwandrohr,
- Figur 13:: Eine perspektivische Darstellung auf ein alternatives Ausführungsbeispiel eines Kapselkörpers mit Längsrippen am Trennwandrohr,
- Figur 14:: Der teilweise aufgeschnittene Kapselkörper gemäss Figur 13,
- Figur 15:: Eine perspektivische und aufgeschnittene Darstellung eines weiteren Kapselkörpers mit einer Verstärkungsrippe in Umfangsrichtung am Trennwandrohr,
- Figur 16:: Ein Querschnitt durch einen Kapselkörper mit Trennwandrohr und Berstfolie,
- Figur 17:: Eine vergrösserte Detaildarstellung des Filterelements am Kapselkörper gemäss Figur 16,
- Figur 18:: Eine perspektivische und teilweise aufgeschnittene Darstellung des Kapselkörpers gemäss Figur 16,
- Figur 19:: Ein Querschnitt durch einen Kapselkörper mit einem Filterelement als separates Bauteil,
- Figur 20:: Eine perspektivische und teilweise aufgeschnittene Darstellung des Kapselkörpers gemäss Figur 19,
- Figur 21:: Eine perspektivische und vergrösserte Darstellung des separaten Filterelements gemäss Figur 19,
- Figur 22:: Ein Querschnitt durch das separate Filterelement gemäss Figur 21,
- Figur 23:: Eine vergrösserte Detaildarstellung auf eine Auslauföffnung eines Auslaufrohrs mit eingebauten Stegen,
- Figur 24:: Eine Detaildarstellung eines Filterelements mit Feinfilter und Berstfolie nach dem Filterelement,
- Figur 25:: Eine Detaildarstellung eines Filterelements mit Feinfilter und Berstfolie vor dem Filterelement,
- Figur 26:: Ein System bestehend aus einer Kapsel und einer Getränkezubereitungsmaschine in schematischer Darstellung,
- Figur 27: Ein Querschnitt durch ein alternatives Ausführungsbeispiel einer Kapsel mit einem Trennwandrohr und mit schlitzartigen Filteröffnungen am oberen Ende des Auslaufrohrs,
- Figur 28: Eine teilweise geschnittene perspektivische Darstellung des Kapselkörpers gemäss Figur 27,
- Figur 29: Eine perspektivische geschnittene Darstellung des Kapselkörpers gemäss Figur 28 mit zusätzlichen Filteröffnungen,
- Figur 30: Eine teilweise geschnittene perspektivische Darstellung eines alternativen Kapselkörpers mit einem Filterelement im Bereich der Auslassöffnung,
- Figur 31: Eine Seitenansicht eines erfindungsgemässen Ausführungsbeispiels eines Kapselkörpers mit eingerastetem Auslaufrohr,
- Figur 32: Ein Querschnitt durch den Kapselkörper gemäss Figur 31,
- Figur 33: Ein Querschnitt durch den Kapselkörper gemäss Figur 31, jedoch mit einem alternativen Auslaufrohr,
- Figur 34: Eine perspektivische Darstellung des Kapselkörpers gemäss Figur 32 vor dem Einsetzen des Auslaufrohrs,
- Figur 35: Eine perspektivische Darstellung des Kapselkörpers gemäss Figur 33 vor dem Einsetzen des Auslaufrohrs, und
- Figur 36: Einen Querschnitt durch eine weitere erfindungsgemässe Ausgestaltung eines Kapselkörpers.

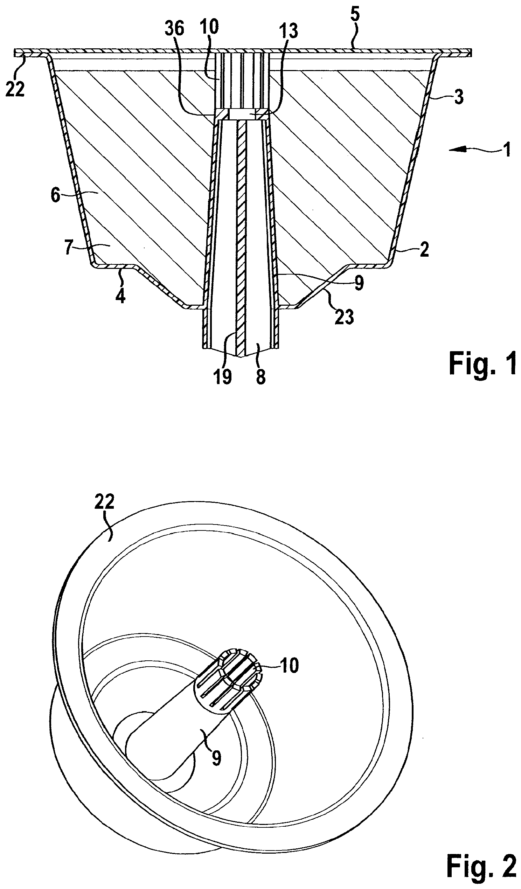

Wie in Figur 1 dargestellt, besteht eine insgesamt mit 1 bezeichnete Kapsel aus einem Kapselkörper 2 mit einer Seitenwand 3 und einem Boden 4. Der Kapselkörper hat insgesamt eine kegelstumpfförmige Konfiguration und er ist am Boden mit einer Vertiefung 23 versehen, die je nach Anwendungsfall aber auch wegfallen könnte. Am oberen Ende der Seitenwand 3 ist ein umlaufender Rand 22 angeordnet, an welchem ein Deckel 5 befestigt ist. Der Kapselkörper 2 bildet zusammen mit dem Deckel 5 eine geschlossene Kammer 6, die mit einer Substanz 7, beispielsweise mit gemahlenem Kaffee gefüllt ist. Aus Gründen der besseren Übersichtlichkeit ist die Substanz 7 in den nachstehenden Ausführungsbeispielen nicht mehr dargestellt. Ausserdem wird in der Regel nur noch der Kapselkörper ohne den Deckel dargestellt.

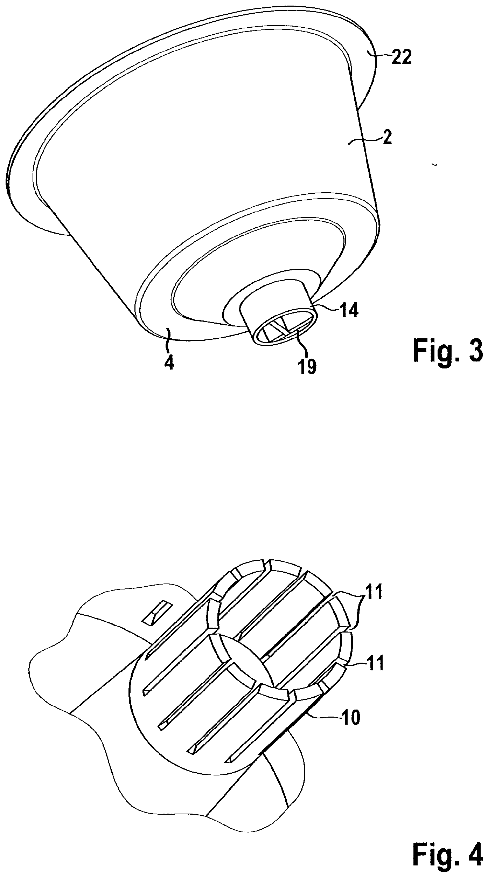

Die Kapsel gemäss Figur 1 ist in ihrem Zentrum mit einem Auslaufrohr 9 versehen, das sich leicht konisch verjüngend vom Boden 4 bis zum Deckel 5 erstreckt und das auf der Aussenseite des Kapselkörpers 2 in eine Auslauföffnung 8 mündet. Im Bereich unmittelbar unter dem Deckel 5 geht das Auslaufrohr 9 in ein Filterelement 10 über, das mit schlitzartigen Filteröffnungen 11 (Figur 4) versehen ist. Die eigentliche Einlassöffnung 13 in das allseitig geschlossene Auslaufrohr 9 liegt somit unmittelbar am unteren Ende der Filteröffnungen. Die Stirnseite des verlängerten Auslaufrohrs 9 bzw. des Filterelements 10 ist direkt mit dem Deckel 5 versiegelt, welcher somit den oberen Abschluss des Filterrohrs bildet.

Das Auslaufrohr 9 ist in seiner Längsrichtung durch einen sternförmigen Steg 19 unterteilt, der sich von der Einlassöffnung 13 bis zur Auslassöffnung 8 erstreckt. Die Einlassöffnung 13 ist in einer Stauplatte 36 angeordnet, welche dem sternförmigen Steg 19 vorgelagert ist. Wie insbesondere aus Figur 3 ersichtlich ist, bildet der letzte Abschnitt des Auslaufrohrs einen Rohrstutzen 24, aus dem die Flüssigkeit unmittelbar in eine Tasse oder in ein anderes Gefäss fliessen kann.

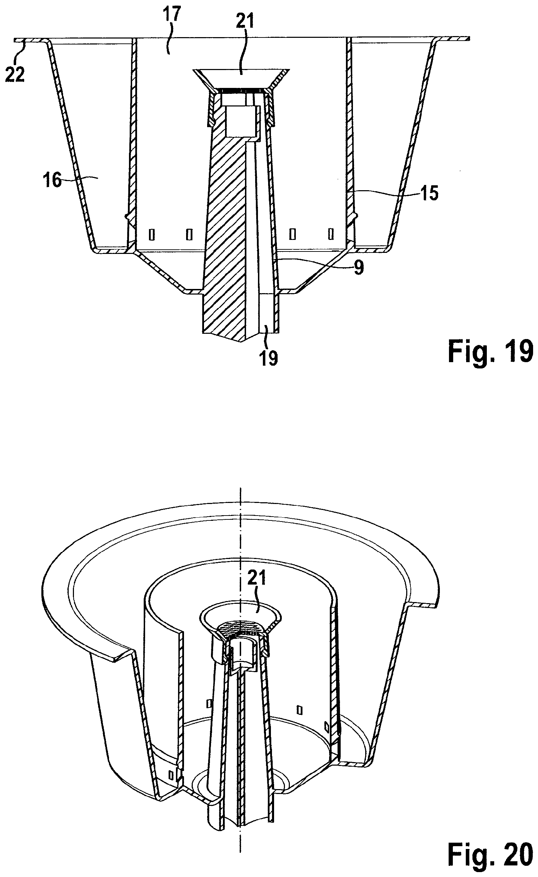

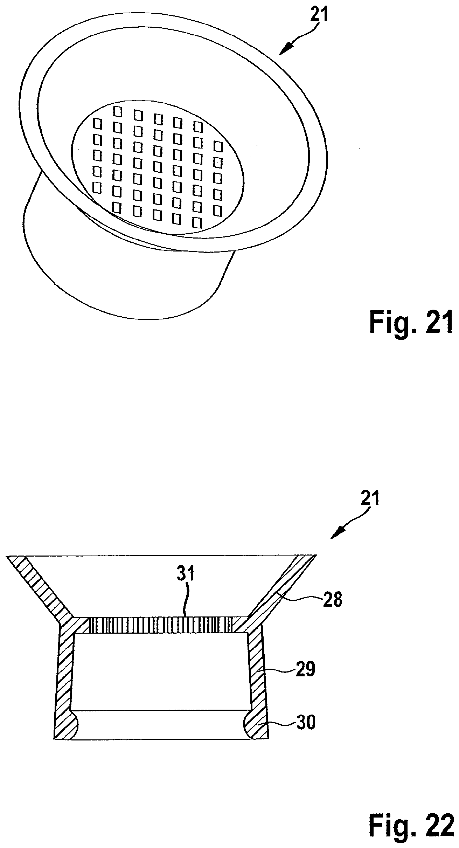

Der Kapselkörper gemäss den Figuren 1 bis 3 ist einstückig als Spritzgussteil aus Kunststoff hergestellt. Dies gilt auch für die weiteren Ausführungsbeispiele mit Ausnahme desjenigen gemäss den Figuren 19 bis 22 und 31 bis 35. Alternativ wäre es selbstverständlich denkbar, den Kapselkörper in einem Tiefziehverfahren herzustellen und das Auslaufrohr mit dem Filterelement als separates Teil einzusetzen. Auch die Aussenkonfiguration des Kapselkörpers und die Dimensionierung und Anordnung des Auslaufrohrs könnten im Einzelfall abgeändert werden.

Der Deckel 5 der Kapsel bildet eine Eintrittsseite für das Durchleiten einer Flüssigkeit durch die Kammer 6, wobei in der Regel der Deckel 5 mit Hilfe eines Penetrationsmittels durchstochen wird. Ersichtlicherweise bildet der Boden 4 eine Austrittsseite für die Flüssigkeit mit der Auslauföffnung 8. Die auf der Eintrittsseite eintretende Flüssigkeit gelangt jedoch nicht direkt zur Austrittsseite, sondern muss zuerst das Filterelement 10 und das Auslaufrohr 9 passieren.

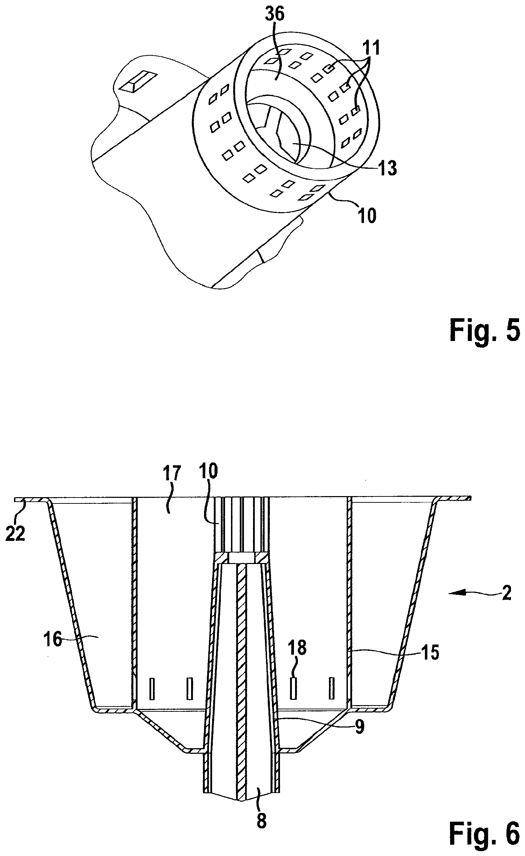

Die Filteröffnungen können je nach Anwendungsfall unterschiedliche Formen und Anordnungen aufweisen. Beim Ausführungsbeispiel gemäss Figur 5 handelt es sich um zwei Reihen von einzelnen Öffnungen, die über den Umfang des Filterelements 10 verteilt sind. In Figur 5 ist auch noch die Einlassöffnung 13 in der Stauplatte 36 sichtbar, die durch die leichte Querschnittsverengung eine Strömungsblende bildet. Auch beim Ausführungsbeispiel gemäss Figur 5 wird der obere Abschluss durch den Deckel 5 gebildet.

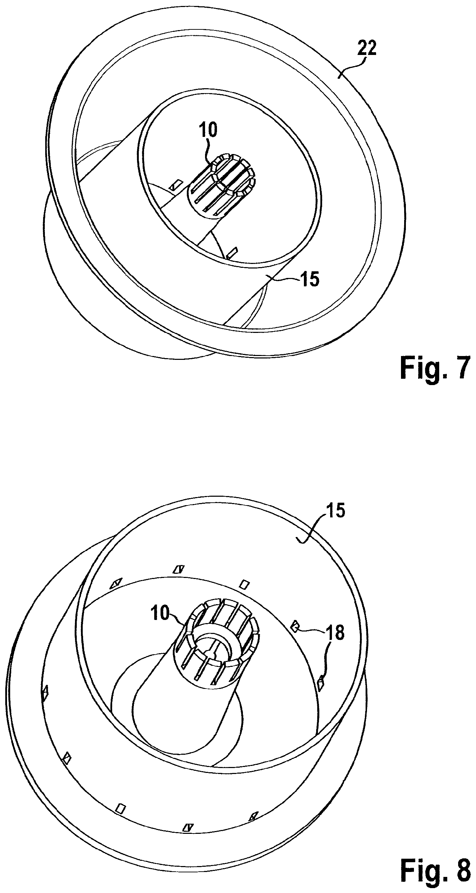

Die Figuren 6 bis 8 zeigen ein alternatives Ausführungsbeispiel eines Kapselkörpers 2, dessen Filterelement gleich aufgebaut ist wie beim Ausführungsbeispiel gemäss Figur 1. Zusätzlich ist jedoch noch ein Trennwandrohr 15 angeordnet, das zylindrisch ausgebildet ist und sich vom Boden 4 bis zur Ebene des umlaufenden Randes 22 erstreckt. Auf diese Weise wird eine äussere Ringkammer 16 und eine innere Ringkammer 17 gebildet. Für den Übergang der Flüssigkeit zwischen den beiden Kammern sind in einem bodennahen Bereich Übergangsöffnungen 18 in der Form von Schlitzen angeordnet. Der Deckel wird bei diesem Kapselkörper mit dem umlaufenden Rand 22, mit dem oberen Rand des Trennwandrohrs 15 und mit der Stirnseite des Filterelements 10 verbunden. Die Übergangsöffnungen 18 könnten je nach Bedarf ebenfalls eine Filterwirkung ausüben. Eine auf der Eintrittsseite in die äussere Kammer 16 eingespritzte Flüssigkeit muss ersichtlicherweise zunächst durch die Übergangsöffnungen 18 in die innere Kammer 17 gelangen, dort wiederum bis zum Filterelement 10 aufsteigen und danach in das Auslaufrohr 9 eintreten.

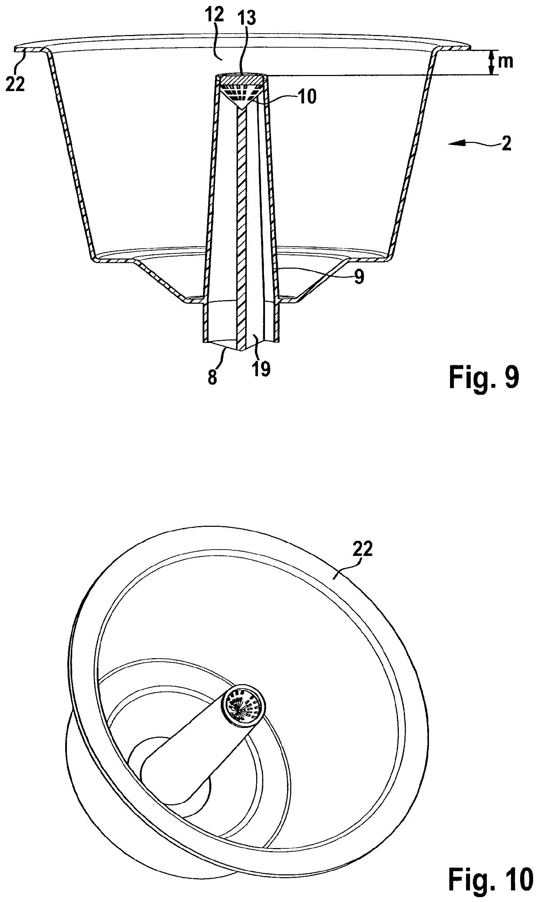

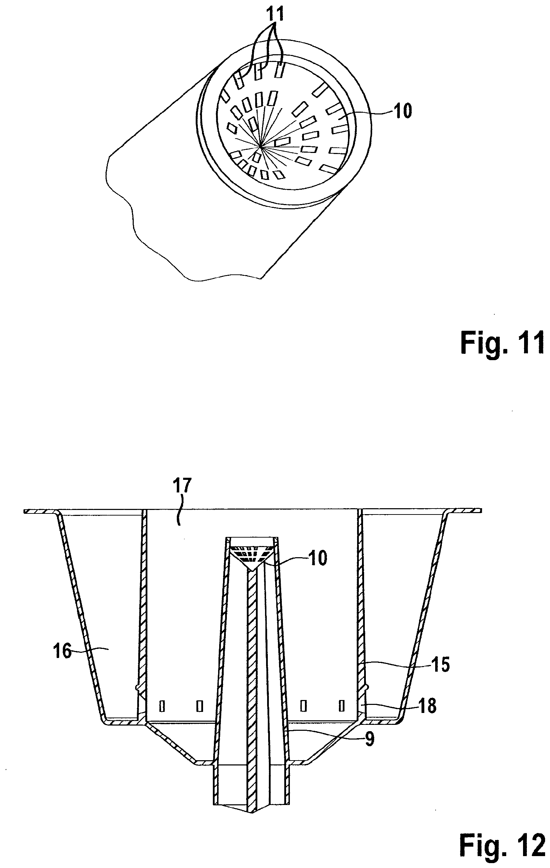

Beim Ausführungsbeispiel gemäss den Figuren 9 bis 11 erstreckt sich das Auslaufrohr 9 am oberen Ende nur bis zu einem Zwischenraum 12 unter den Deckel bzw. unter den umlaufenden Rand 22, wobei das Mass m den jeweiligen Verhältnissen angepasst werden kann. Das Filterelement 10 ist relativ zur Einlassöffnung 13 zurückversetzt im Auslaufrohr 9 angeordnet. Das Filterelement ist als kegelförmiger Wandabschnitt mit einzelnen Filteröffnungen 11 (Figur 11) ausgebildet, wobei die Kegelspitze gegen die Auslauföffnung 8 gerichtet ist. Von der Kegelspitze bis zur Auslauföffnung erstreckt sich ebenfalls ein sternförmiger Steg 19 im Auslaufrohr.

Gemäss Figur 12 ist der Kapselkörper gemäss Figur 9 noch durch ein Trennwandrohr 15 ergänzt, dessen Funktion im übrigen gleich ist wie beim Ausführungsbeispiel gemäss Figur 6.

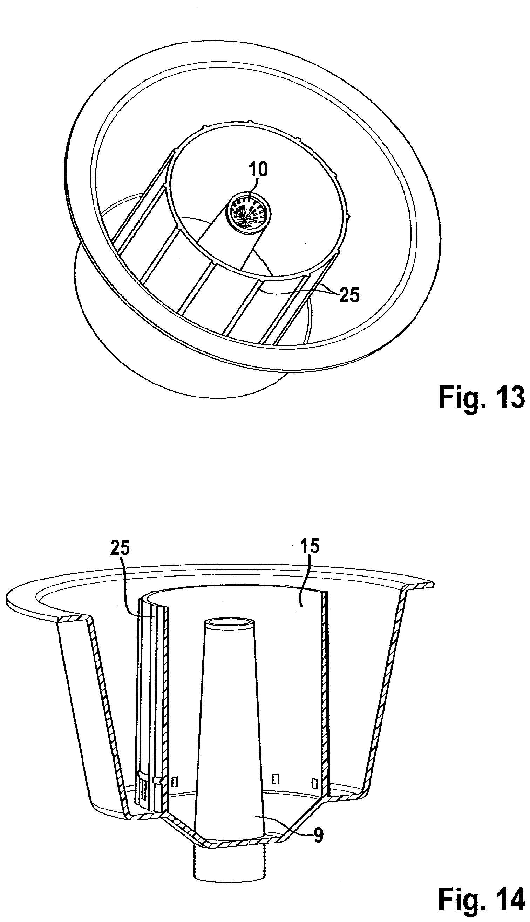

Gemäss den Figuren 13 und 14 ist das Trennwandrohr 15 noch durch Längsrippen 25 verstärkt. Durch diese Verstärkung kann der Zylinder steifer ausgebildet werden, was beim Verschweissen des Deckels 5 mit der Oberkante des Trennwandrohrs in der Produktion vorteilhaft ist.

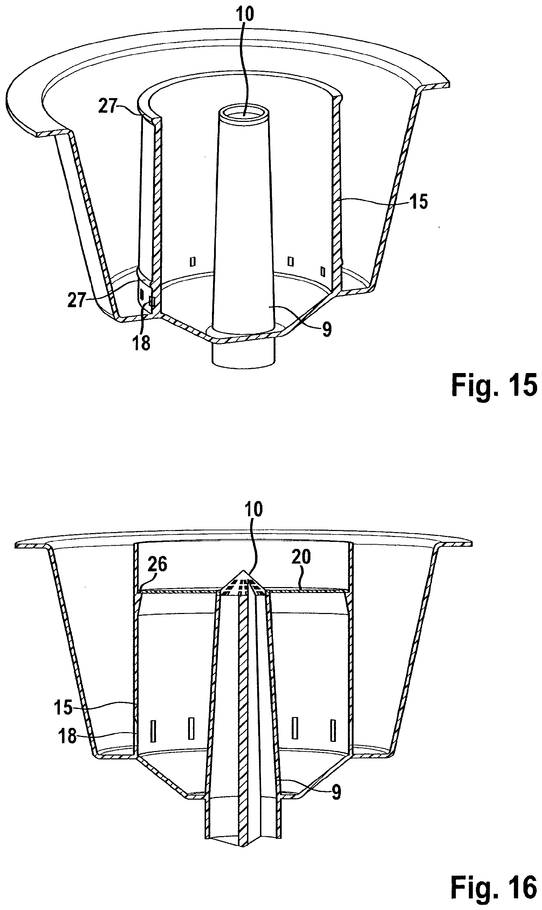

Beim Ausführungsbeispiel gemäss Figur 15 ist das Trennwandrohr sowohl im bodennahen Bereich über den Übergangsöffnungen 18 als auch am oberen Rand mit einer umlaufenden Rippe 27 versehen. Selbstverständlich wäre es denkbar, die umlaufenden Rippen 27 mit den Längsrippen 25 gemäss Figur 13 und 14 zu kombinieren. Die obere Rippe dient insbesondere auch als Siegelfläche für die Befestigung der Deckelfolie.

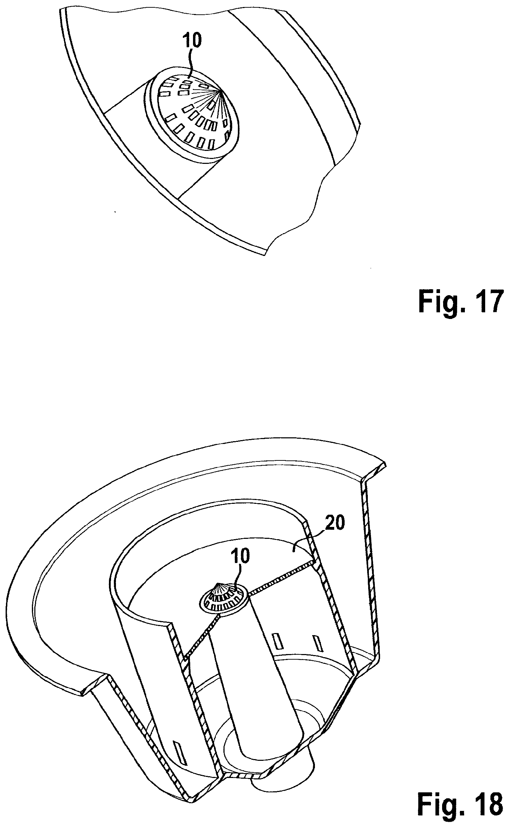

Beim Ausführungsbeispiel gemäss den Figuren 16 bis 18 besteht der Filterkörper 10 ebenfalls aus einem kegelförmigen Wandabschnitt mit einzelnen Filteröffnungen 11. Im Gegensatz zum Ausführungsbeispiel gemäss den Figuren 9 bis 12 ist die Kegelspitze jedoch gegen den Deckel nach oben gerichtet. Bei diesem Ausführungsbeispiel ist ausserdem das Trennwandrohr 15 auf der Innenseite mit einer Siegelkante 26 versehen. Auf dieser wird eine Berstfolie 20 befestigt, die sich bis unmittelbar unter das Filterelement 10 erstreckt und auch mit der oberen Stirnseite des Auslaufrohrs 9 verbunden ist. Ersichtlicherweise wird so der Innenraum der Kapsel, insbesondere die äussere Kammer 16 und ein Teil der inneren Kammer 17 hermetisch gegenüber der Aussenatmosphäre der Kapsel abgeschlossen. Die Berstfolie zerreisst unter Einwirkung des Innendrucks in der Kapsel, so dass die Flüssigkeit durch das Filterelement 10 in das Auslaufrohr fliessen kann. Eine derartige Berstfolie könnte auch bei den vorbeschriebenen Ausführungsbeispielen unmittelbar über der Einlassöffnung 13 des Auslaufrohrs 9 befestigt werden. Der hermetische Abschluss mittels einer Berstfolie ist aus verschiedenen Gründen zweckmässig, beispielsweise wenn der Kapselkörper und der Deckel aus einem Material gefertigt sind, das aromadichte bzw. gasdichte Eigenschaften aufweist und das für Sauerstoff nicht oder nur schwer durchdringbar ist, oder um Feuchtigkeitsaustausch der Kapselfüllung mit der Umgebung zu verhindern.

Beim Ausführungsbeispiel gemäss den Figuren 19 bis 22 besteht das Filterelement 21 aus einem separaten Bauteil, das auf das obere Ende des Auslaufrohrs 9 aufgeschnappt wird. Wie dargestellt, ist hier ebenfalls ein Trennwandrohr 15 vorhanden, das aber auch wegfallen könnte. Das Filterelement 21 ist mit einem Einlauftrichter 28 versehen, der zu einer Lochsiebplatte 31 führt. Unterhalb der Lochsiebplatte ist ein zylindrischer Kragen 29 mit einem Innenwulst 30 angeordnet, der beispielsweise zur Herstellung einer Schnappverbindung dient. Im Auslaufrohr 9 ist ebenfalls ein Steg 19 angeordnet, von dem in Figur 19 ein Stegflügel ganz geschnitten ist.

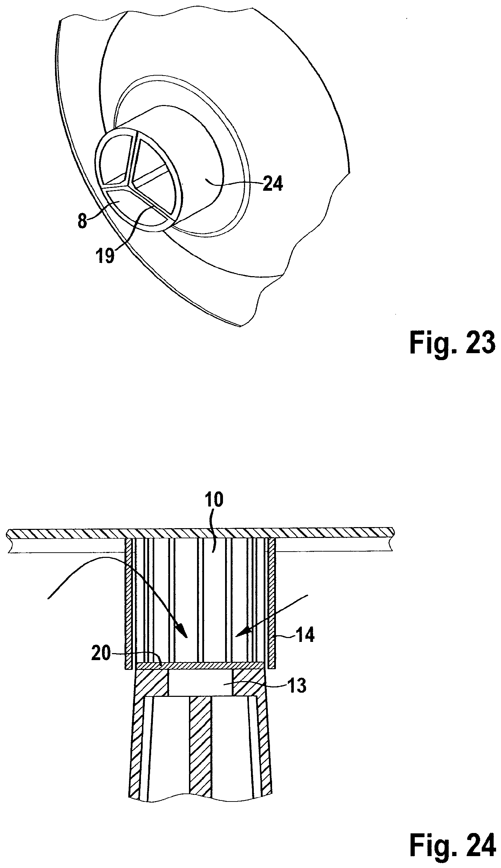

In Figur 23 ist etwas vergrössert nochmals ein Rohrstutzen 24 als Bestandteil des Auslaufrohrs mit der Auslauföffnung 8 dargestellt. Der im Auslaufrohr angeordnete Steg 19 verläuft sternförmig mit einzelnen Wandabschnitten, die untereinander in einem Winkel von 120° angeordnet sind. Selbstverständlich wären alternative Steganordnungen denkbar, insbesondere beispielsweise ein gekreuzter Steg.

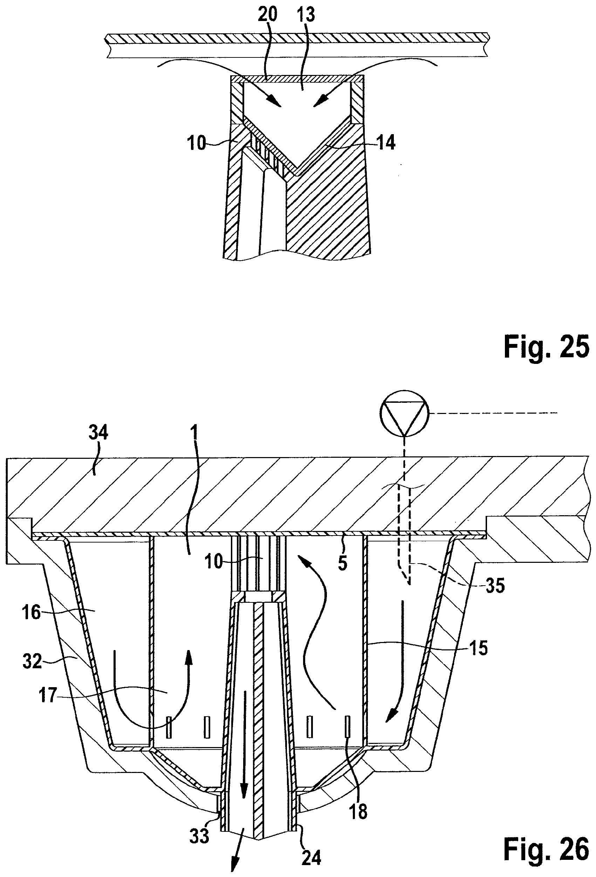

Bei den Ausführungsbeispielen gemäss den Figuren 24 und 25 ist jeweils in Strömungsrichtung vor den Filteröffnungen des Filterelements ein Feinfilter 14 angeordnet. Dieser könnte beispielsweise aus einem Vliesmaterial aus Papier, Textilfasern oder Kunststoff bestehen. Zusätzlich ist über der Einlassöffnung 13 eine Berstfolie 20 angebracht, welche ersichtlicherweise gemäss Figur 24 nach dem Filterelement und gemäss Figur 25 vor dem Filterelement liegt.

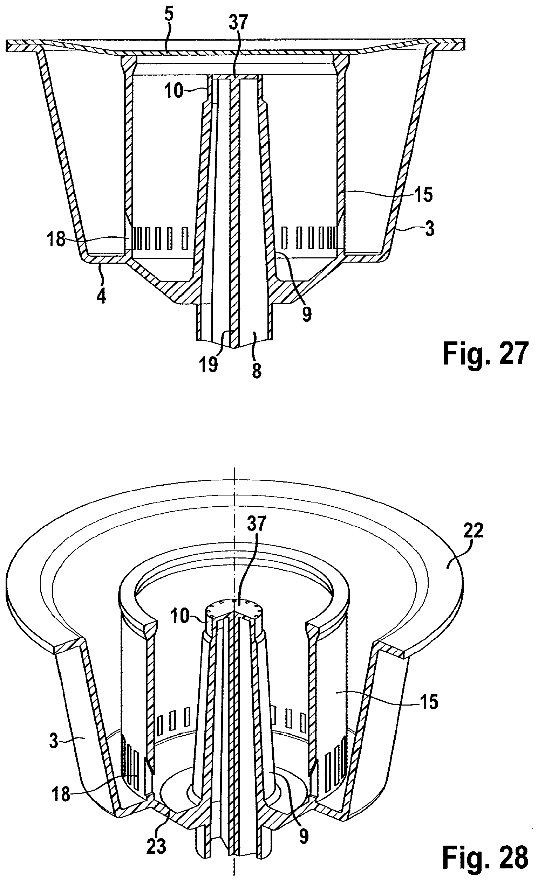

Figur 26 zeigt rein schematisch eine Kapsel 1 gemäss einem der beschriebenen Ausführungsbeispiele in der Halterung 32 einer nicht näher dargestellten Getränkezubereitungsmaschine. Diese Halterung 32 verfügt auf der Unterseite über eine Öffnung 33, durch welche der Rohrstutzen 24 des Auslaufrohrs 9 ragt. Die kammerförmige Halterung ist mit einem Deckelteil 34 verschlossen, das ein Penetrationselement in der Form einer Injektionsnadel 35 aufweist. Durch diese strömt eine Flüssigkeit, beispielsweise heisses Wasser, unter Druck in die äussere Kammer 16, falls ein Trennwandrohr 15 vorhanden ist. Danach durch die Übergangsöffnungen 18 in die innere Kammer 17 bis zum Filterelement 10 und durch dieses in das Auslaufrohr 9. Je nach Inhalt der Kapsel findet dabei ein Extraktionsprozess verschiedener Stoffe oder auch eine Mischung von Extraktion und Lösung statt. Beispielsweise könnten die beiden Kammern gemahlenen Kaffee und Milchpulver aufweisen, wobei der Kaffee extrahiert wird und das Milchpulver mit der durchströmenden Flüssigkeit in Lösung geht. Die Figuren 27 und 28 zeigen eine Kapsel bzw. einen Kapselkörper, bei welchem das Auslaufrohr am oberen Ende mit einer Abschlussplatte 37 abgeschlossen ist. Unterhalb dieser im Abstand zum Deckel 5 angeordneten Abschlussplatte ist das Filterelement 10 angeordnet. Dieses besteht aus in Längsrichtung verlaufenden Schlitzen, die über den Umfang des Filterrohrs verteilt sind. Der kreuzförmige Steg 19 erstreckt sich bis zur Abschlussplatte 37 und ist mit dieser verbunden, so dass das Auslaufrohr 9 in einzelne Kammern unterteilt ist. Die radial durch die Schlitze einströmende Flüssigkeit prallt dabei gegen die Stege, womit eine sehr gute Verwirbelung erreicht wird.

Die Kapsel verfügt noch über ein Trennwandrohr 15 mit umlaufenden Übergangsöffnungen 18, wobei das Trennwandrohr die Abschlussplatte 37 überragt und am oberen Rand mit dem Deckel 5 verschweisst ist. Selbstverständlich könnte die hier gezeigte Gestaltung des Auslaufrohrs mit der Abschlussplatte auch mit alternativen Kapselkörpern realisiert werden, insbesondere könnte dabei das Trennwandrohr auch wegfallen. Das Trennwandrohr 15 ist vorzugsweise auf einer tieferen Ebene angeordnet, als der umlaufende Rand 22.

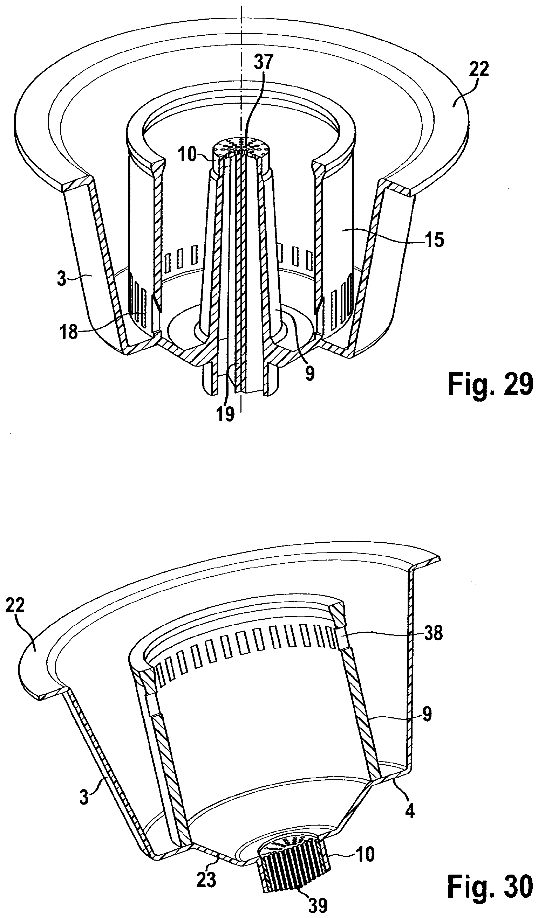

Das Ausführungsbeispiel gemäss Figur 29 zeigt einen Kapselkörper, der fast identisch ist mit demjenigen gemäss Figur 28. Zusätzlich zu den seitlichen Schlitzen sind jedoch in der Abschlussplatte 37 Filteröffnungen in einer Lochsiebstruktur angeordnet. Es ist allerdings auch denkbar, dass die Schlitze wegfallen und das lediglich auf der oberen Abschlussplatte 37 eine oder mehrere Düsenöffnungen angeordnet sind, die nicht zwingend eine Filterfunktion haben müssen.

Beim Ausführungsbeispiel gemäss Figur 30 hat der innerhalb der Kapsel liegende Abschnitt des Auslaufrohrs 9 einen wesentlich grösseren Innendurchmesser als im Bereich des ausserhalb der Kapsel liegenden Abschnitts. Der hier nicht dargestellte Deckel wird mit dem umlaufenden Rand 22 und mit der Oberkante des Auslaufrohrs verschweisst, wobei die Oberkante des Auslaufrohrs nicht auf der Ebene des umlaufenden Randes liegen muss. Die Flüssigkeit tritt am oberen Ende durch Einlaufschlitze 38 in das Auslaufrohr. Der Durchmesser des Auslaufrohrs 9 innerhalb der Kapsel entspricht etwa dem Durchmesser der Vertiefung 23 im Boden Kapsel. Eine Besonderheit bei diesem Ausführungsbeispiel besteht ausserdem noch darin, dass das Filterelement 10 im Auslaufbereich angeordnet ist und zwar in der Form von Filterlamellen 39, welche sich über den gesamten ausserhalb der Kapsel liegenden Abschnitt des Auslaufrohrs erstrecken. Selbstverständlich könnte das Filterelement an dieser Stelle auch aus einer Siebplatte mit Öffnungen in Lochsiebstruktur bestehen. Ausserdem wäre es grundsätzlich möglich, dass auch bei einer alternativen Ausgestaltung des Kapselkörpers das Filterelement immer im Bereich der Auslauföffnung im Auslaufrohr angeordnet ist.

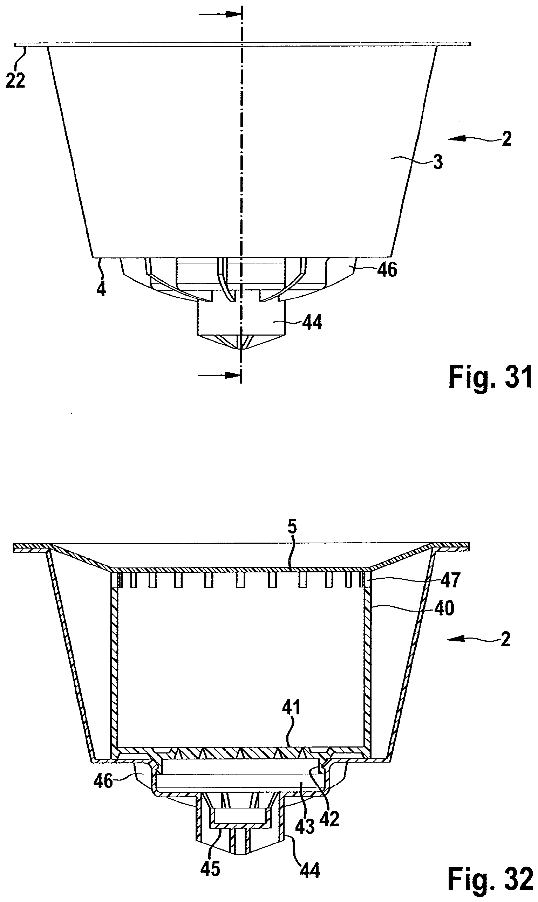

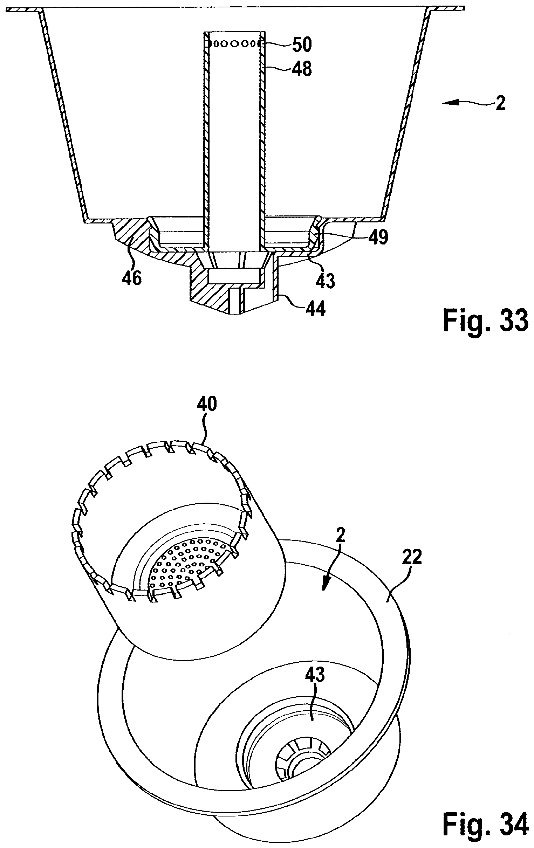

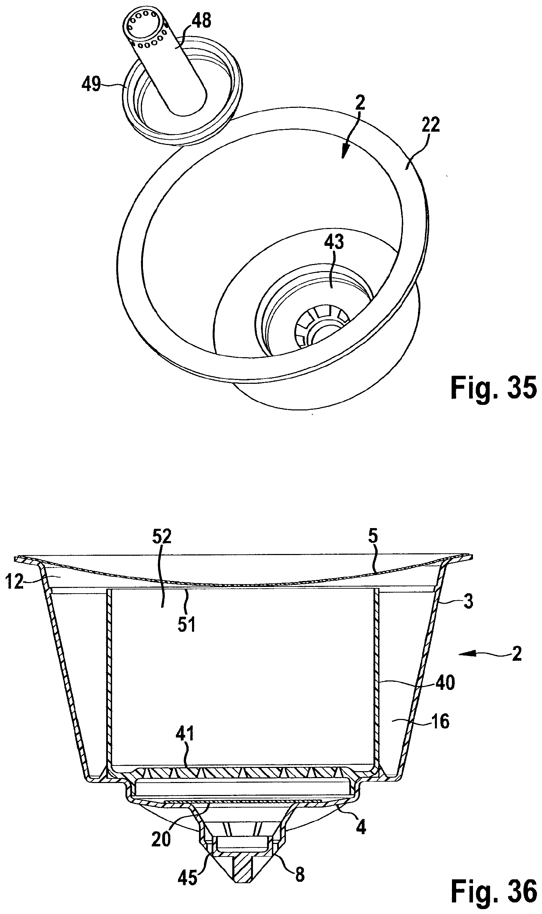

Die Figuren 31 bis 35 zeigen alternative Ausführungsbeispiele eines Kapselkörpers mit unterschiedlichen Auslaufrohreinsätzen, wobei die Ausführungsformen der Figuren 33 und 35 nicht erfindungsgemäss sind. Der Kapselkörper 2 selbst besteht wie bei den vorstehend beschriebenen Ausführungsbeispielen aus einer etwa kegelstumpfförmigen Seitenwand 3, welche am grösseren Durchmesser einen umlaufenden Rand 22 zur Fixierung des Deckels aufweist. Am Boden 4 ist eine hohlzylindrische Vertiefung 43 angeordnet, welche in einen Rohrstutzen 44 übergeht. Etwas unterhalb der Ebene des Bodens 4 ist auf der Innenseite der Vertiefung eine umlaufende Randaufprägung als Rastmittel angebracht. Innerhalb des Rohrstutzens 44 ist an seitlichen Rippen eine Prallplatte 45 gehalten. Auf der Aussenseite sind unter dem Boden radiale Versteifungsrippen 46 angeordnet, welche den Rohrstutzen 44, die Vertiefung 43 und den Boden 4 miteinander verbinden.

In die Vertiefung 43 ist ein Auslaufrohreinsatz 40 eingerastet, der an seinem Boden über einen Schnapprand 42 verfügt. Der Boden selbst ist durch eine Filterplatte 41 abgeschlossen. Am oberen Rand sind Schlitze 47 als weiteres Filterelement angeordnet. Der obere Rand wird hier durch den Deckel (5) abgeschlossen (Figur 32). Der Durchmesser des Auslaufrohreinsatzes 40 ist grösser als der Durchmesser der Vertiefung 43 und erstreckt sich bis nahe an den Aussendurchmesser des Bodens 4. In der Vertiefung 43 kann eine Berstfolie angeordnet sein, so dass der Innenraum der Kapsel hermetisch abgeschlossen ist.

Figur 33 zeigt den gleichen Kapselkörper 2 wie Figur 31, wobei lediglich die Schnittebene auf der linken Hälfte durch eine Versteifungsrippe 46 gelegt ist. In die Vertiefung 43 ist jedoch ein alternativer Auslaufrohreinsatz 48 eingerastet, der einen wesentlich geringeren Rohrdurchmesser aufweist. Am unteren Ende ist dieser Auslaufrohreinsatz einstückig mit einem Einrasttopf 49 ausgebildet. Dieser überbrückt den Durchmesserunterschied und sorgt für ausreichende Seitenstabilität. Auch hier kann eine Berstfolie am Boden der Vertiefung 43 eingesetzt sein. Einziges Filterelement sind die umlaufenden Öffnungen 50 am oberen Rand des Auslaufrohreinsatzes 48. Der obere Rand ist ebenfalls dazu bestimmt, mit dem Deckel abgeschlossen zu werden, analog zu Figur 32.

Auch beim Ausführungsbeispiel gemäss Figur 33 wäre es denkbar, die Öffnungen 50 wegzulassen und das obere Ende des Auslaufrohrs 48 mit einer Platte abzuschliessen, in welcher eine oder mehrere Düsenöffnungen angeordnet sind.

Wie in den Figuren 34 und 35 dargestellt, ist es mit der separaten Ausgestaltung von Auslaufrohreinsätzen möglich, im gleichen Kapselkörper ganz unterschiedliche Auslaufrohre mit unterschiedlichen Filtern einzusetzen. Selbstverständlich können auch bei dieser Bauweise die Kapselkörper und die Auslaufrohre beliebig abgewandelt und kombiniert werden. So wäre es beispielsweise denkbar, den oberen Rand des Auslaufrohres nicht mit dem Deckel, sonder mit einer Abschlussplatte oder mit einer Filterfolie abzudecken. Der Rohrstutzen 44 könnte beispielsweise ebenfalls mit Filterlamellen 39 analog zu Figur 30 versehen sein.

Figur 36 zeigt ein weiteres Ausführungsbeispiel einer Kapsel mit einer gewissen Ähnlichkeit zum Ausführungsbeispiel gemäss Figur 32. Im Kapselkörper ist dabei ebenfalls ein separater Auslaufrohreinsatz 40 in einer Vertiefung im Boden eingerastet. Dieser ist einstückig mit einer Filterplatte 41 versehen. Zwischen der Filterplatte und der Auslauföffnung 8 kann eine Berstfolie 20 angeordnet sein. Das obere Ende des Auslaufrohrs 40 ist jedoch nicht mit dem Deckel 5 versiegelt und es sind auch keine seitlichen Öffnungen im Auslaufrohr vorgesehen. Es verbleibt vielmehr ein Zwischenraum 12 zwischen dem Deckel 5 und dem oberen Ende des Auslaufrohrs 40 und letzteres ist mit einer Filterfolie 51 abgedeckt. In der so gebildeten Kammer 52 kann analog zum Ausführungsbeispiel gemäss Figur 32 eine Substanz eingeschlossen werden, die unabhängig vom Deckel von der äusseren Ringkammer abgetrennt ist.

## Patentansprüche

1. Kapsel (1) mit einem vorzugsweise rotationssymmetrisch ausgebildeten Kapselkörper (2) mit einer Seitenwand (3) und mit einem insbesondere einstückig mit dieser ausgebildeten Boden (4), sowie mit einem den Kapselkörper abdeckenden Deckel (5) zur Bildung wenigstens einer Kammer (6), welche eine Substanz (7) für die Zubereitung eines flüssigen Lebensmittels enthält, wobei für die Durchleitung einer Flüssigkeit durch die Kammer der Deckel eine Eintrittsseite und der Boden eine Austrittsseite mit einer vorzugsweise zentralen Auslauföffnung (8) bildet und wobei die Auslauföffnung am Ende eines Auslaufrohrs mit relativ grossem Durchmesser angeordnet ist, wobei sich das Auslaufrohr wenigstens teilweise vom Boden gegen den Deckel erstreckt und wobei zum Zurückhalten von Feststoffen in der Kapsel am Auslaufrohr und/oder im Auslaufrohr wenigstens ein Filterelement mit Filteröffnungen (47) angeordnet ist, wobei das Auslaufrohr wenigstens über einen Teil seiner Länge als separates Bauteil (40) ausgebildet ist, **dadurch gekennzeichnet, dass** das als separates Bauteil ausgebildete Auslaufrohr an dessen Boden mit einer Filterplatte (41) abgeschlossen ist und ausschliesslich oder zusätzlich mit einer Substanz gefüllt ist.

2. Kapsel nach Anspruch 1, **dadurch gekennzeichnet, dass** das separate Bauteil am Boden der Kapsel eingesetzt oder einsetzbar ist.

3. Kapsel nach Anspruch 1 oder 2, **dadurch gekennzeichnet, dass** der Boden der Kapsel eine kreisförmige Vertiefung aufweist, in welcher das als separates Bauteil ausgebildete Auslaufrohr eingerastet oder einrastbar ist.

4. Kapsel nach Anspruch 3, **dadurch gekennzeichnet, dass** in der Vertiefung im Boden eine Berstfolie (20) aufgenommen ist, so dass der Innenraum der Kapsel hermetisch abgeschlossen ist.

5. Kapsel nach einem der Ansprüche 1 bis 4, **dadurch gekennzeichnet, dass** das als separates Bauteil (40) ausgebildete Auslaufrohr einstückig mit der Filterplatte (41) versehen ist.

6. Kapsel nach Anspruch 1, **dadurch gekennzeichnet, dass** das Filterelement (51) am oberen, dem Deckel (5) zugewandten Ende des Auslaufrohrs angeordnet ist.

7. Kapsel nach Anspruch 1 oder 6, **dadurch gekennzeichnet, dass** sich das Auslaufrohr bis an die Unterseite des Deckels (5) erstreckt und mit diesem verbunden ist.

8. Kapsel nach Anspruch 6 oder 7, **dadurch gekennzeichnet, dass** das Filterelement Filteröffnungen in der Form von Schlitzen (47) oder andere Öffnungen im Auslaufrohr aufweist, die sich vorzugsweise in Längsrichtung und um das Auslaufrohr erstrecken.

9. Kapsel nach Anspruch 1 oder 6, **dadurch gekennzeichnet, dass** sich das Auslaufrohr bis auf einen verbleibenden Zwischenraum unter den Deckel (5) erstreckt und dass das Filterelement, insbesondere eine Filterfolie (51) über einer Einlassöffnung des Auslaufrohrs angeordnet ist.

10. Kapsel nach Anspruch 1 oder einem der Ansprüche 6 bis 9, **dadurch gekennzeichnet, dass** sich das Auslaufrohr über wenigstens zwei Drittel der Distanz zwischen dem Boden (4) und dem Deckel (5) erstreckt.

11. Kapsel nach Anspruch 1 oder einem der Ansprüche 6 bis 10, **dadurch gekennzeichnet, dass** das Filterelement einstückig mit dem Auslaufrohr ausgebildet ist.

12. Kapsel nach Anspruch 1 oder einem der Ansprüche 6 bis 11, **dadurch gekennzeichnet, dass** das Auslaufrohr in einen Rohrstutzen (44) mündet, in dem eine Prallplatte (45) angeordnet ist.

13. System umfassend eine Kapsel nach einem der Ansprüche 1 bis 12, und eine Getränkezubereitungsmaschine mit einer Halterung (32) zur Aufnahme der Kapsel (1) und mit Mitteln zum Durchleiten einer Flüssigkeit durch die Kapsel, wobei wenigstens ein Penetrationselement (35) zum vorzugsweise exzentrischen Penetrieren des Deckels (5) der Kapsel an der Halterung angeordnet ist.

## Claims

1. Capsule (1) with a preferably rotationally symmetrically formed capsule body (2) with a side wall (3) and with a base (4) formed in particular in one piece therewith, and with a lid (5) covering the capsule body to form at least one chamber (6) which contains a substance (7) for the preparation of a liquid foodstuff, wherein for the passage of a liquid through the chamber the lid forms an inlet side and the base forms an outlet side with a preferably central outlet opening (8) and wherein the outlet opening is arranged at the end of an outlet tube with a relatively large diameter, the outlet tube extending at least partially from the base towards the lid and at least one filter element with filter openings (47) being arranged on the outlet tube and/or in the outlet tube for retaining solids in the capsule, the outlet tube being designed as a separate component (40) over at least part of its length, **characterized in that** the outlet tube designed as a separate component is closed off at its base by a filter plate (41) and is filled exclusively or additionally with a substance.

2. Capsule according to claim 1, **characterised in that** the separate component is inserted or insertable at the bottom of the capsule.

3. Capsule according to claim 1 or 2, **characterised in that** the base of the capsule has a circular recess in which the outlet tube, which is designed as a separate component, is engaged or can be engaged.

4. Capsule according to claim 3, **characterised in that** a bursting foil (20) is received in the recess in the base so that the interior of the capsule is hermetically sealed.

5. Capsule according to any one of claims 1 to 4, **characterised in that** the outlet tube formed as a separate component (40) is provided integrally with the filter plate (41).

6. Capsule according to claim 1, **characterised in that** the filter element (51) is arranged at the upper end of the outlet tube facing the lid (5).

7. Capsule according to claim 1 or 6, **characterised in that** the outlet tube extends to the underside of the lid (5) and is connected thereto.

8. Capsule according to claim 6 or 7, **characterized in that** the filter element has filter openings in the form of slots (47) or other openings in the outlet tube, preferably extending longitudinally and around the outlet tube.

9. Capsule according to claim 1 or 6, **characterised in that** the outlet tube extends except for a remaining intermediate space under the lid (5) and that the filter element, in particular a filter foil (51), is arranged above an inlet opening of the outlet tube.

10. Capsule according to claim 1 or one of claims 6 to 9, **characterised in that** the outlet tube extends over at least two thirds of the distance between the base (4) and the lid (5).

11. Capsule according to claim 1 or one of claims 6 to 10, **characterised in that** the filter element is formed integrally with the outlet tube.

12. Capsule according to claim 1 or one of claims 6 to 11, **characterized in that** the outlet tube opens into a tube socket (44) in which a baffle plate (45) is arranged.

13. System comprising a capsule according to any one of claims 1 to 12, and a beverage preparation machine with a holder (32) for receiving the capsule (1) and with means for passing a liquid through the capsule, wherein at least one penetration element (35) for preferably eccentrically penetrating the lid (5) of the capsule is arranged on the holder.

## Revendications

1. Capsule (1) avec un corps de capsule (2) réalisé de préférence à symétrie de révolution avec une paroi latérale (3) et avec un fond (4) réalisé en particulier d'une seule pièce avec celle-ci, ainsi qu'avec un couvercle (5) recouvrant le corps de capsule pour former au moins une chambre (6), qui contient une substance (7) pour la préparation d'un produit alimentaire liquide, dans lequel, pour le passage d'un liquide à travers la chambre, le couvercle forme un côté d'entrée et le fond un côté de sortie avec une ouverture de sortie (8) de préférence centrale, et dans lequel l'ouverture de sortie est disposée à l'extrémité d'un tube de sortie de diamètre relativement grand, le tube de sortie s'étendant au moins partiellement du fond vers le couvercle et au moins un élément de filtre avec des ouvertures de filtre (47) étant disposé sur le tube de sortie et/ou dans le tube de sortie pour retenir les matières solides dans la capsule, le tube de sortie étant conçu comme un composant séparé (40) au moins sur une partie de sa longueur, **caractérisé en ce que** le tube de sortie conçu comme un composant séparé est fermé à son fond par une plaque de filtre (41) et est rempli exclusivement ou en plus d'une substance.

2. Capsule selon la revendication 1, **caractérisée en ce que** le composant séparé est inséré ou peut être inséré au fond de la capsule.

3. Capsule selon la revendication 1 ou 2, **caractérisée en ce que** le fond de la capsule présente un creux circulaire dans lequel le tube d'écoulement, conçu comme un composant séparé, est enclenché ou peut être enclenché.

4. Capsule selon la revendication 3, **caractérisée en ce qu'**une feuille d'éclatement (20) est logée dans le creux du fond, de sorte que l'intérieur de la capsule est fermé hermétiquement.

5. Capsule selon l'une quelconque des revendications 1 à 4, **caractérisée en ce que** le tube de sortie, étant conçu comme un composant séparé (40), est pourvu d'une seule pièce avec la plaque de filtre (41).

6. Capsule selon la revendication 1, **caractérisée en ce que** l'élément de filtre (51) est disposé à l'extrémité supérieure du tube de sortie, tournée vers le couvercle (5).

7. Capsule selon la revendication 1 ou 6, **caractérisée en ce que** le tube de sortie s'étend jusqu'à la face inférieure du couvercle (5) et est relié à celui-ci.

8. Capsule selon la revendication 6 ou 7, **caractérisée en ce que** l'élément de filtre comporte des ouvertures de filtration sous la forme de fentes (47) ou d'autres ouvertures dans le tube de sortie, qui s'étendent de préférence dans la direction longitudinale et autour du tube de sortie.

9. Capsule selon la revendication 1 ou 6, **caractérisée en ce que** le tube de sortie s'étend sous le couvercle (5) à l'exception d'un espace intermédiaire restant et **en ce que** l'élément de filtre, en particulier une feuille filtrante (51), est disposé au-dessus d'une ouverture d'entrée du tube de sortie.

10. Capsule selon la revendication 1 ou l'une des revendications 6 à 9, **caractérisée en ce que** le tube de sortie s'étend sur au moins deux tiers de la distance entre le fond (4) et le couvercle (5).

11. Capsule selon la revendication 1 ou l'une des revendications 6 à 10, **caractérisée en ce que** l'élément de filtre est formé d'une seule pièce avec le tube de sortie.

12. Capsule selon la revendication 1 ou l'une des revendications 6 à 11, **caractérisée en ce que** le tube de sortie débouche dans une tubulure (44) dans laquelle est disposée une plaque d'impact (45).

13. Système comprenant une capsule selon l'une des revendications 1 à 12, et une machine de préparation de boissons avec un support (32) pour recevoir la capsule (1) et avec des moyens pour faire passer un liquide à travers la capsule, au moins un élément de pénétration (35) étant disposé sur le support pour pénétrer de préférence de manière excentrique le couvercle (5) de la capsule.
